# EUROPEAN PATENT APPLICATION

(11) **EP 1 486 469 A1**
(43) Date of publication of application: **15.12.2004**
(21) Application number: 04253469.3
(22) Date of filing: 10.06.2004
(51) Int. Cl.: C03C 17/34, C03C 17/00, B32B 17/10

(54) **Method and system for repairing glass surfaces**

(30) Priority: 10.06.2003 GB 0313362
(71) Applicant: Chicago Glass (UK) Limited, Gravesend, Kent DA12 1EW (GB)
(72) Inventor: Button, Alan G., Wateringbury, Kent ME18 5DS (GB); Missions, Gary J., Dartford, Kent DA1 3DH (GB)
(74) Representative: Bankes, Stephen Charles Digby

(57) **Abstract**

A method of preparing a scratched glass surface comprises the steps of applying to the area of damaged glass a clear liquid cure-on-demand resin (18) to wet the damaged surface of the glass and fill the scratches, and thereafter applying over the layer of resin a transparent laminated film (20) of plastics material. The adhesive resin has the effect of concealing the scratches to give a clear transparent surface, and the laminated film maintains this effect and protects the surface against further damage. The whole area being repaired is preferably abraded prior to application of the resin.

## Description

This invention relates to a method and a system for repairing and restoring damaged glass surfaces, and in particular vertical surfaces such as those of vehicle and building windows which have been scratched. The problem of vandals scratching windows with glass cutters or other abrasive objects, for example the windows of buses and trains, has increased in recent years.

Conventional methods of repairing scratches in glass surfaces involves polishing out the damage with an abrasive, which has the disadvantage of wearing down the stock of the glass and thereby causing distortion. It is therefore an object of the invention to provide a method of repairing scratches which does not affect the thickness of the glass, and preferably a system which protects the glass from further damage.

The present invention provides a method for repairing a scratched glass surface which includes the steps of:
i Applying to the area of damaged glass a clear, cure-on-demand resin to wet the damaged surfaces of the glass and fill the scratches and a transparent laminated film of plastics material covering the layer of resin;
ii Curing the resin to form a hard surface between the film and the glass; and
iii Applying a bonding agent around the peripheral edges of the film to seal the film to the glass or to a window frame.

In one preferred embodiment of the invention, in step i, the resin is painted in liquid form over the scratched area. The resin is then cured and the hardened resin scraped off the surface of the glass, using a suitably sharp implement, leaving a smooth flat finish with the scratches filled. A thin layer of similar or compatible adhesive resin is then applied over the whole area of glass being repaired, and the laminated film applied.

In another embodiment, as a preliminary step, the whole area of glass being treated is abraded prior to step (i). While the abrasion initially reduces the transparency of the surface, application of the resin, which fills grooves and scratches and the surrounding abraded area, renders the glass surface once again clear and transparent.

The resin applied in step (i) may be applied as a liquid resin, the laminated film being applied over it. Alternatively, the resin may be applied as an adhesive layer pre-coated onto the laminated film.

By means of the invention, scratches in the glass surface can be made to effectively disappear, the optical clarity of the glass is restored and the laminated film can confer additional protection against further damage. The work can be carried out *in situ* on glass which is vertical or at any other angle.

Preferred embodiments of the invention will now be described in more detail with reference to the accompanying drawings wherein:
Figure 1 illustrates the painting of an adhesive resin onto a scratched glass surface in accordance with a first embodiment of the invention;
Figure 2 illustrates the cured resin being scraped off the surface of the glass, leaving resin in the earlier voids;
Figure 3 is an enlarged partial cross-sectional view illustrating the application of additional resin onto the smooth glass surface of Figure 2;
Figure 4 illustrates the application of a laminated plastics film over the coated surface;
Figure 5 is an enlarged partial cross-sectional view through the repaired glass;
Figure 6 illustrates a preliminary abrading stage of a process in accordance with a second embodiment of the invention and
Figure 7 illustrates an adhesive spray coating step following the abrading step of Figure 6.
Figure 8 illustrates the application of an adhesive-coated laminated film in accordance with a third embodiment of the invention.

As a preliminary to carrying out the process of the invention, the damaged glass surface should first be thoroughly cleaned to remove any grease, marks or other contaminants from the surface. The glass can be prepared with a cleaning agent such as a proprietary cleaner, a solvent such as methylated spirit or a glass preparation agent such as "special cleaner" marketed by Bohle. A surface free of dust and contamination is essential to achieve a good result, since any dust or dirt on the surface will be trapped below the materials to be applied and will be both visible and magnified by the process.

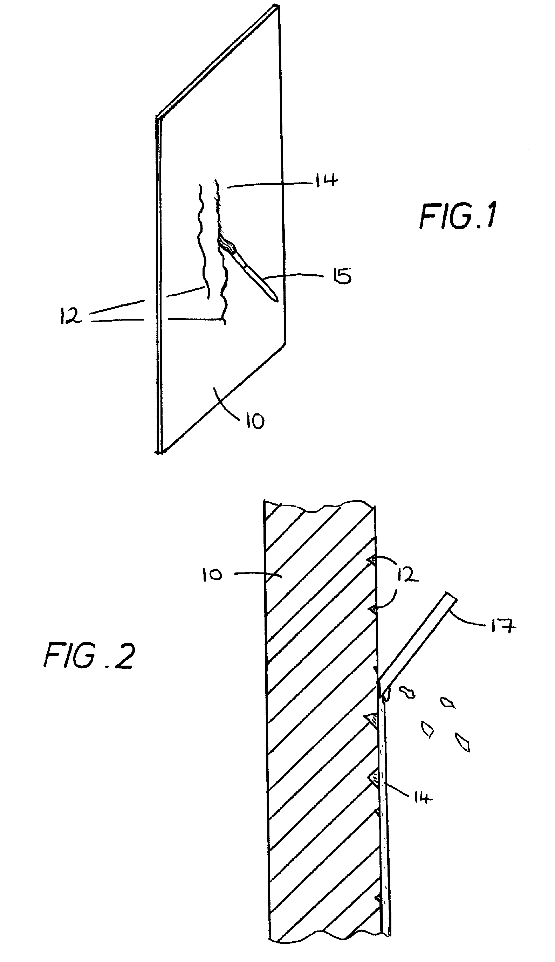

Figure 1 shows a sheet of glass 10 the surface of which has been damaged by scratches 12. In the first stage of the process of the invention a clear liquid adhesive 14 is applied to the damaged surface, for example with a brush 15, and worked into the full depth of all the scratches. The effect of applying the resin is to take the brightness out of the damaged glass caused by the reflective faces of the scratches.

The type of resin used for this stage is one which can be cured on demand by any suitable curing means, for example ultraviolet light, bright visible light, heat, humidity or absence of air (anaerobic curing). The resin should preferably have a relatively low viscosity in its uncured state, preferably 10 to 50 cps and more preferably 20 to 40 cps, to ensure that it easily fills all the scratches without trapping air bubbles. Examples of suitable resins which are available commercially are Glas.Weld PRO 100 series, Locktite range of light curing products, or the Veryfix range of curing adhesives sold by Bohle.

The preferred resins are single component, solvent-free liquids usually from the acrylated urethane family which can be rapidly cured, preferably with ultraviolet or bright light to give a clear coating. Glas.Weld Pro 100, for example, has a viscosity of 20 cps and can be rendered tack-free in about 40 seconds with use of a UV lamp. This type of resin has a freezing point below minus 10°C, which allows it to be used as a bonding agent for the film year round. The traditional method of fixing sacrificial film uses water as a medium between the film and the glass and as this film of water remains for up to 90 days, manufacturers do not recommend installing the film in external situations between September and April.

In the second stage of the process illustrated by Figure 2, the cured coating on the surface of the glass is removed using a razor blade 17 or similar sharp implement to leave a smooth, clear finish to the glass but leaving resin in the void of the original scratches.

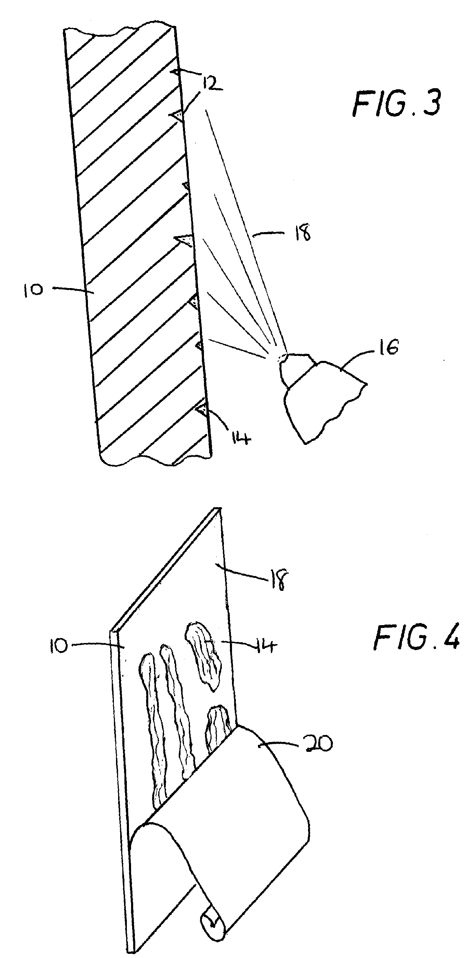

In the third stage of the process, illustrated in Figure 3, a similar or compatible or clear liquid adhesive resin 18 is spread over the whole glass surface by any suitable spray means 16, to give a uniform coating and overcome the problem of a junction of dissimilar materials which would normally make the edges of the damage obvious because of refraction. With this second coating, the scratches, if still visible, appear only as two very fine tramlines.

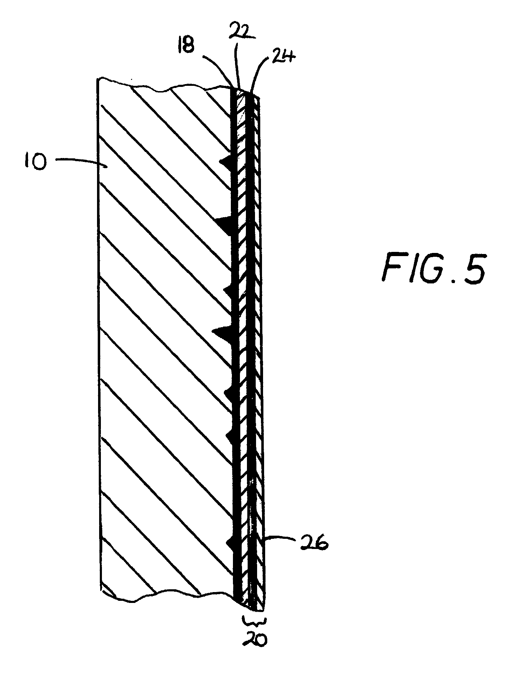

In the next stage of the process, illustrated in Figure 4, a laminated sheet 20 of plastics material is applied over the adhesive-coated surface. As shown in Figure 5, the laminate 20 may suitably comprise a first plastics film 22, a pressure-sensitive adhesive layer 24 and a top layer 26 which can be stripped off if it in turn becomes damaged by fresh graffiti or other scratches. The structure is thus somewhat similar to the multi-laminates used on the visors of racing drivers' helmets, enabling them to strip off one layer if the visor becomes covered in oil or dirt. Such "sacrificial" films typically comprise two layers of polyester film with an adhesive layer sandwiched between them. Suitable laminates include the Window Films range sold by the 3M Company in the UK, the Protekt range, especially Protekt CL400 sold by Madico of USA and the 7140 glass protection film range sold by Avery Dennison in the Netherlands. All these films are manufactured with an adhesive which allows the film to be peeled off from the surface to which they are attached and replaced with a fresh film.

The laminated film is suitably applied to the uncured liquid resin surface using a squeegee or the like to remove all air bubbles and make sure that a thin film of resin remains over the whole interface between the glass and the laminated film to bond the film to the glass.

In the next stage, the resin is cured to form a hard flat surface between the film and the glass, bonding the plastic laminated sheet in place. Depending on the properties of the resin used, curing can be activated by radiation, for example with a lamp, or by heating or the selected resin may include sufficient moisture to allow it to cure, or may be one which cures automatically when laminated, owing to the anaerobic conditions between the laminate and the glass. Finally, a bonding agent is applied around the edges of the glass, typically over a width from 5 to 20 mm, suitably about 10 mm. This covers the edges of the film and seals the "sandwich" of the material to the glass or window frame. The purpose of this sealant is to stop moisture entering between the laminate and the glass and to stop potential vandals from picking at the edge of the laminate to tear it off or set fire to it. The bonding agent may suitably be a varnish, a silicone sealant such as Dow Corning Wet Glaze or a two-part adhesive, for example an epoxy resin such as Araldite, applied with a brush, roller, dispenser or pressure gun.

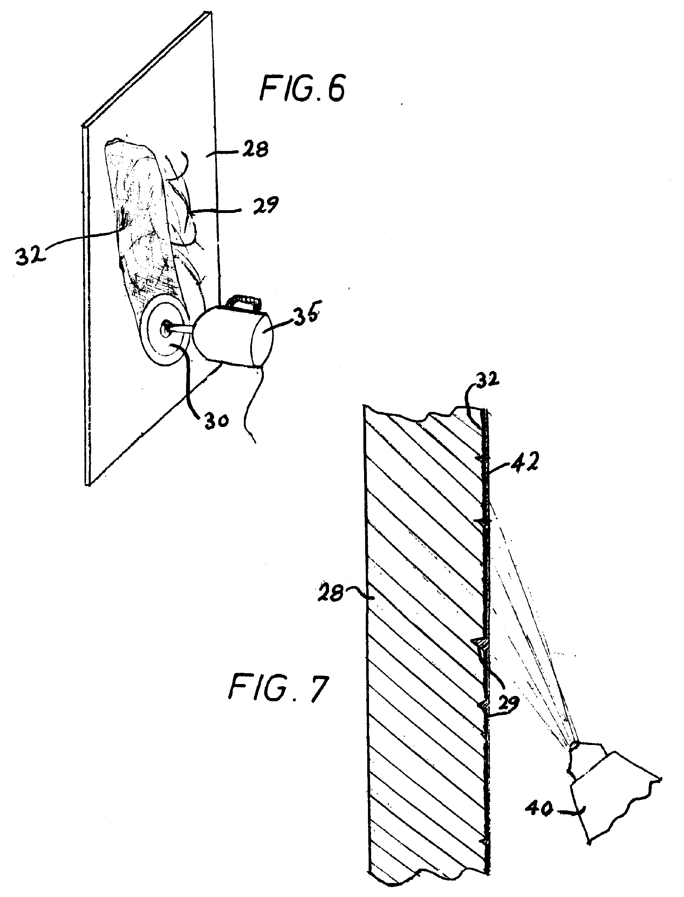

Referring now to Figure 6, a glass sheet 28 such as a vehicle window has been defaced with scratches 29. In this embodiment of the invention, as a preliminary step the whole scratched area is abraded with an electrically powered rotary abrading disk 30. The disk may suitably have a diameter in the range from 10 to 15 cm, and be mounted on a 1500 to 1800 rpm centre water feed sander. Particularly suitable disks are sold via the 3M Corporation under the trademark 3M Trizact, the abrasive surfaces of which are manufactured by microreplication. The disks use microstructured pyramid patterns of fine grade minerals. As the minerals at the top wear away, fresh new cutting edges are continually exposed. The coarsest grade of disk A35 is particularly suitable for this stage of the process of the invention.

The abrading step removes the sharp edges of the scratches and leaves a somewhat opaque abraded area 32 which then requires further treatment to render it transparent again.

As shown in Figure 7, transparency is restored by spraying the entire surface of the glass, including the abraded surface 32, with a liquid adhesive resin using a spray nozzle 40, to give an adhesive coating 42 over the whole surface area of the glass. The resin can be the same as that already described in relation to Figure 3, and the transparent laminated sheet of plastics material can then be applied over the adhesive layer and, the remainder of the process is as already described in connection with Figures 1 to 5, the resin being cured to form a hard transparent surface between the film and the glass and a bonding agent being applied around the peripheral edges of the film to seal the film to the glass.

The film applied over the spray-coated resin may itself be coated, on the side applied to the glass, with a layer of pressure-sensitive adhesive. Such laminates are available commercially with coating thicknesses in the range from up to about 17 g.m⁻². It can however be difficult to achieve a smooth finish in this way.

It has however now been found that if a thicker layer of adhesive is coated onto the film, above 20 g.m⁻² and preferably at least 25 g.m⁻², the laminate can be applied directly onto the abraded surface of the glass, without the need for the spray-coating step of Fig 7.

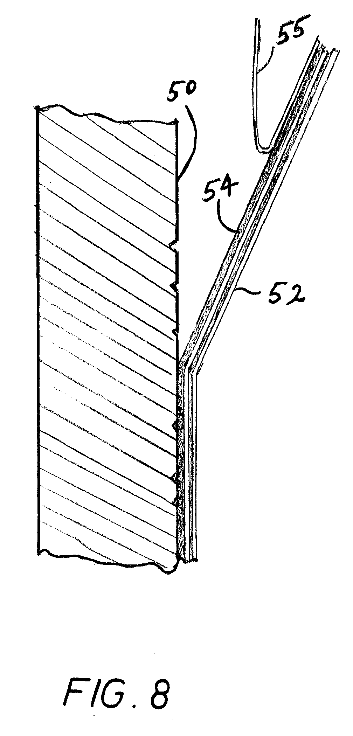

In the embodiment of Fig 8, a laminate 52, coated with a tacky layer 54 of pressure-sensitive adhesive, preferably an acrylic adhesive, is applied to the abraded surface 50 of a scratched glass sheet, after removal of a backing sheet 55. The coating thickness of layer 54 is typically in the range from 25 to 30 g.m⁻². This deposits a thick coating of liquid adhesive between the glass and the laminated film, creating the same optical effect as painting or a liquid resin, masking the damage to leave a clean finish.

In summary, the process of the present invention provides a way of masking scratches in a glass surface with minimum wear or damage to the glass itself and at the same time can provide additional protection against further damage. The first stage, painting the adhesive resin into the scratches, masks the brightness of the damage, while the second and third stages coat the whole surface. The third stage masks the "tramline" edges of the scratches which may still be visible after the second stage. The subsequent stages provide a protective film over the repaired surface, with an edge sealant to prevent picking at the laminate and causing further damage.

The main advantages of the process of the invention over the prior art, in particular for deep scratches or edged graffiti on glass in vertical locations are:
1. Compared with polishing out the damage with an abrasive the process results in a much smoother finish and substantially less distortion because it does not involve the removal of stock of the glass.
2. Compared with floating a coating on a vertical surface, this process has substantially improved masking quality as there are four or more layers of material reducing the refraction rather than one. The finished surface is smoother, and the curing time will typically be a matter of minutes rather than hours, so that the risk of contamination is reduced.
3. The invention combines the advantages of sacrificial films, with the masking of scratches. The known sacrificial laminates do not themselves do anything to mask the appearance of scratch damage, because the adhesive is too viscous to act as a wetting agent and fill the scratches. By means of the invention however the scratches can be made to effectively disappear and the glass is protected against future damage. It is known that if a scratched or abraded glass surface is coated in water the scratches and abrasions disappear. The effect of coating with liquid resin and bonding the laminated sheet to the glass surface renders this phenomenon permanent.
4. The bonding agent used preferably has a freezing point of below minus 10°C, which allows it to be used in external situations all year round.

## Claims

1. A method for repairing a scratched glass surface which includes the steps of:
i applying to the area of damaged glass a clear, cure-on-demand (14) to wet the damaged surfaces of the glass and fill the scratches (12), and a transparent laminated film of plastics material (20) covering the layer of resin;
ii curing the resin to form a hard surface between the film and the glass; and
iii applying a bonding agent around peripheral edges of the film to seal the film to the glass or to a window frame.

2. A method according to claim 1 wherein step (i) includes the following steps:
ia. Painting liquid resin (14) over the scratched surface;
ib. Curing the resin and scraping excess hardened resin off the surface of the glass, leaving a smooth flat finish with the scratches (12) filled and
ic. Applying a thin layer of similar or compatible adhesive resin (18) over the whole area of glass being repaired, prior to placing the laminated film (20) over the glass.

3. A method according to claim 1 or claim 2 wherein, as a preliminary step prior to step (i), the whole area of glass (29) being treated is abraded.

4. A method according to any preceding claim wherein the resin (14) applied in step (i) is a single component, solvent-free liquid resin.

5. A method according to claim 4 wherein said resin is an acrylated urethane resin.

6. A method according to claim 1 wherein the resin has a viscosity of 20 to 40 cps.

7. A method according to claim 1 wherein the laminated film (20) applied in step (i) comprises two layers of polymeric film (22, 26) with an adhesive layer (24) sandwiched between them.

8. A method according to claim 7 wherein the layers of polymeric film (22, 26) are made from polyester.

9. A method according to any preceding claim wherein the cure in step (iii) is effected using heat or radiation.

10. A method according to any preceding claim wherein in step (i) the resin is applied to the glass (50) as an adhesive layer (54) pre-coated onto the laminated film (54).

11. A method according to claim 10 wherein said adhesive layer (54) is coated on the laminate (54) in an amount of at least 25 g.m⁻².
